# EUROPÄISCHE PATENTSCHRIFT

(11) **EP 4 204 242 B1**
(45) Veröffentlichungstag und Bekanntmachung des Hinweises auf die Patenterteilung: **19.06.2024**
(21) Anmeldenummer: 21745821.5
(22) Anmeldetag: 19.07.2021
(51) Int. Cl.: B60G 7/00, B60G 9/00, B60G 9/02

(54) **VERBINDUNGSSYSTEM**
CONNECTION SYSTEM
SYSTÈME DE CONNEXION

(30) Priorität: 31.08.2020 DE 102020210971
(43) Veröffentlichungstag der Anmeldung: 05.07.2023
(73) Patentinhaber: ZF Friedrichshafen AG, 88046 Friedrichshafen (DE)
(72) Erfinder: DI SARNO, Marco, 49080 Osnabrück (DE); KNOPP, Sören, 49179 Ostercappeln (DE); HELM, Eike, 49356 Diepholz (DE); LENZ, Paul, 94065 Waldkirchen (DE); BERGMANN, Thomas, 94032 Passau (DE); HOHER, Karlheinz, 88677 Markdorf (DE); WAIM, Thomas, 94481 Grafenau (DE); RENNER, Stefan, 78351 Bodman-Ludwigshafen (DE)
(74) Vertreter: ZF Friedrichshafen AG
(86) Internationale Anmeldenummer: PCT/EP2021/070120
(87) Internationale Veröffentlichungsnummer: WO 2022/042943

(56) Entgegenhaltungen:
- EP-A2- 1 231 083
- WO-A1-02/06067
- WO-A1-2009/125238
- WO-A1-2019/154157
- US-A- 6 129 367
- US-A1- 2019 135 101

## Beschreibung

Die Erfindung bezieht sich auf ein Verbindungssystem und auf ein Fahrzeug, insbesondere ein Nutzfahrzeug. Zudem bezieht sich die Erfindung auch auf ein Verfahren zur Herstellung einer Verbindungsbrückenvorrichtung eines Verbindungssystems.

Mehrpunktlenker und mehrteilige Fahrzeugachsen sind aus dem Stand der Technik bekannt. So zeigt beispielsweise die deutsche Patentanmeldung DE 199 62 406 A1 einen Vierpunktlenker und die US-amerikanische Patentanmeldung US 2019/0135101 A1 eine Achsanordnung mit einem Elektromotor. Aus der WO 2019/154157 A1 ist eine mehrteilige Fahrzeugachse mit einer daran angeordneten Antriebsbaugruppe bekannt. Die WO2019/154157 A1 zeigt den Oberbegriff des Anspruchs 1.

Es wird eine Verbindungsbrückenvorrichtung, um einen Mehrpunktlenker an eine mehrteilige Fahrzeugachse anzubinden, vorgeschlagen. Die Verbindungsbrückenvorrichtung umfasst zumindest einen Grundkörper zu einer Aufnahme und Ableitung von zwischen der Fahrzeugachse und dem Mehrpunktlenker übertragenen Kräften und/oder Momenten. Die Verbindungsbrückenvorrichtung umfasst zumindest eine Achsbefestigungseinheit zu einer Befestigung des Grundkörpers an der Fahrzeugachse. Die Verbindungsbrückenvorrichtung umfasst zumindest eine von einer Haupterstreckungsebene des Grundkörpers geschnittene Lenkerkopplungseinheit zu einer Kopplung des Grundkörpers mit dem Mehrpunktlenker.

Die Verbindungsbrückenvorrichtung ist vorzugsweise zumindest teilweise als eine Verbindungsbrücke, insbesondere als eine Achsbrücke, ausgebildet. Der Mehrpunktlenker ist insbesondere als ein Dreipunktlenker oder als ein Vierpunktlenker ausgebildet, wobei der Vierpunktlenker insbesondere zu einer Stabilisierung eines Nutzfahrzeugs vorgesehen ist. Alternativ ist auch vorstellbar, dass der Mehrpunktlenker als ein aufgelöster Dreiecklenker ausgebildet ist. Der aufgelöste Dreiecklenker kann insbesondere zwei V-förmig angeordnete Streben, insbesondere analog zum Dreipunklenker, aufweisen, die einen virtuellen Schnittpunkt aufweisen. Der aufgelöste Dreiecklenker ist insbesondere frei von einem Zentralgehäuse ausgebildet. Vorzugsweise kann die gleiche Fahrzeugachse in Abhängigkeit von einer Ausgestaltung der Verbindungsbrückenvorrichtung mit unterschiedlichen Fahrwerksgeometrien, insbesondere unterschiedlichen Mehrpunktlenkern, verwendet werden. Die Fahrzeugachse ist vorzugsweise als eine motorisierte Achse ausgebildet, die zumindest eine Antriebseinheit umfasst. Die Fahrzeugachse weist insbesondere zumindest zwei, bevorzugt zumindest drei, insbesondere miteinander gekoppelte, Achsteilkörper auf. Alternativ kann die Fahrzeugachse auch einen einzelnen Achsteilkörper aufweisen. Unter einer "Haupterstreckungsebene" eines Objekts soll insbesondere eine Ebene verstanden werden, welche parallel zu einer größten Seitenfläche eines kleinsten gedachten Quaders ist, welcher das Objekt gerade noch vollständig umschließt, und insbesondere durch den Mittelpunkt des Quaders verläuft.

Der Mehrpunktlenker ist vorzugsweise dazu vorgesehen, die Fahrzeugachse mit einem Fahrzeugrahmen eines Fahrzeugs, insbesondere eines Nutzfahrzeugs, zu verbinden. Insbesondere ist der Mehrpunktlenker dazu vorgesehen, während einer Fahrt auf das Fahrzeug, insbesondere auf die Fahrzeugachse des Fahrzeugs, wirkende Kräfte zur Achsführung an den Fahrzeugrahmen weiterzuleiten. Der Mehrpunktlenker, insbesondere der Vierpunktlenker, ist insbesondere dazu vorgesehen, Momente, beispielsweise aufgrund von Wankbewegungen, zumindest teilweise aufzunehmen, um das Fahrzeug zu stabilisieren. Die Kräfte und/oder Momente können insbesondere von dem Mehrpunktlenker zumindest teilweise von der Fahrzeugachse auf den Fahrzeugrahmen übertragen werden. Ist der Mehrpunktlenker zentral direkt an der Fahrzeugachse, insbesondere an einem Zentralteil der Fahrzeugachse, angebunden, können die Kräfte und/oder die Momente die Fahrzeugachse, insbesondere das Zentralteil der Fahrzeugachse, beschädigen. Das Zentralteil kann insbesondere weniger robust, insbesondere weicher, als weitere Achsteilkörper der Fahrzeugachse ausgebildet sein, beispielsweise aufgrund einer Ausbildung zur Aufnahme einer Antriebseinheit.

Die Verbindungsbrückenvorrichtung ist bevorzugt dazu vorgesehen, den Mehrpunktlenker indirekt an die Fahrzeugachse anzubinden. Insbesondere dient die Verbindungsbrückenvorrichtung als ein Verbindungsstück zwischen dem Mehrpunktlenker und der Fahrzeugachse. Vorzugsweise ist die Verbindungsbrückenvorrichtung dazu vorgesehen, den Mehrpunktlenker an zumindest einen verschieden von dem Zentralteil ausgebildeten Achsteilkörper anzubinden. Bevorzugt ist die Verbindungsbrückenvorrichtung dazu vorgesehen, den Mehrpunktlenker an zumindest zwei verschieden von dem Zentralteil ausgebildete Achsteilkörper anzubinden. Vorzugsweise ist die Verbindungsbrückenvorrichtung dazu vorgesehen, die zwischen der Fahrzeugachse und dem Mehrpunktlenker übertragenen Kräfte und/oder Momente zumindest teilweise aufzunehmen und zumindest teilweise von dem Zentralteil, insbesondere in den zumindest einen verschieden von dem Zentralteil ausgebildeten Achsteilkörper, abzuleiten. Unter "vorgesehen" soll insbesondere speziell programmiert, speziell ausgestattet und/oder speziell ausgelegt verstanden werden. Darunter, dass ein Objekt zu einer Funktion vorgesehen ist, soll insbesondere verstanden werden, dass das Objekt die Funktion in zumindest einem Betriebszustand ausführt.

Vorzugsweise umfasst die Verbindungsbrückenvorrichtung zumindest zwei Achsbefestigungseinheiten zu einer Befestigung des Grundkörpers an der Fahrzeugachse, insbesondere an den zumindest zwei verschieden von dem Zentralteil ausgebildeten Achsteilkörpern. Vorzugsweise umfasst die Verbindungsbrückenvorrichtung zumindest eine Lenkerkopplungseinheit zu einer Kopplung des Grundkörpers mit dem als ein Dreipunktlenker ausgebildeten Mehrpunktlenker. Der Grundkörper ist vorzugsweise als ein Metallbauteil, insbesondere als ein Gussbauteil, ausgebildet. Alternativ ist vorstellbar, dass der Grundkörper als ein Verbundwerkstoffbauteil, als ein Schmiedebauteil oder als ein anderes, einem Fachmann als sinnvoll erscheinendes Bauteil ausgebildet ist. Insbesondere weist der Grundkörper eine höhere Bauteilsteifigkeit auf als das Zentralteil der Fahrzeugachse.

Die Achsbefestigungseinheiten und/oder die zumindest eine Lenkerkopplungseinheit sind/ist bevorzugt einteilig mit dem Grundkörper ausgebildet. Unter "einteilig" soll insbesondere in einem Stück geformt verstanden werden. Vorzugsweise wird dieses eine Stück aus einem einzelnen Rohling, einer Masse und/oder einem Guss hergestellt. Insbesondere ist die Verbindungsbrückenvorrichtung als ein einteiliges Bauteil ausgebildet, insbesondere zur Realisierung einer hohen Bauteilsteifigkeit. Die Achsbefestigungseinheiten und/oder die zumindest eine Lenkerkopplungseinheit umfassen/umfasst insbesondere zumindest einen Befestigungskanal, bevorzugt zumindest zwei oder mehr Befestigungskanäle zu einer Aufnahme eines Befestigungsmittels, wie beispielsweise einer Schraube, eines Bolzens o. dgl. Insbesondere erstrecken sich die Befestigungskanäle zumindest abschnittsweise, bevorzugt vollständig durch den Grundkörper, werden insbesondere durch den Grundkörper begrenzt. Vorzugsweise erstreckt sich der zumindest eine Befestigungskanal der zur Kopplung mit dem Dreipunktlenker vorgesehenen Lenkerkopplungseinheit senkrecht zu dem zumindest einen Befestigungskanal der zur Kopplung mit dem Vierpunktlenker vorgesehenen Lenkerkopplungseinheit.

Vorzugsweise ist die zumindest eine Lenkerkopplungseinheit zumindest abschnittsweise in der Haupterstreckungsebene des Grundkörpers angeordnet, insbesondere zu einer effizienten Kraft- und/oder Momentenaufnahme durch den Grundkörper. Bevorzugt erstreckt sich die zumindest eine Lenkerkopplungseinheit zumindest abschnittsweise auf zwei voneinander abgewandten Seiten der Haupterstreckungsebene des Grundkörpers.

Durch die erfindungsgemäße Ausgestaltung der Verbindungsbrückenvorrichtung kann vorteilhaft eine effiziente Kraft- und/oder Momentenaufnahme und Kraft- und/oder Momentenableitung von einem Mehrpunktlenker ermöglicht werden. Vorteilhaft kann eine Entlastung einer, insbesondere mehrteiligen, Fahrzeugachse ermöglicht werden und ein Verschleiß reduziert werden. Vorteilhaft kann ein Einsatz eines Mehrpunktlenkers zusammen mit einer mehrteiligen, insbesondere motorisierten, Fahrzeugachse ermöglicht werden. Vorteilhaft kann eine hohe Fahrzeuginsassensicherheit ermöglicht werden.

Des Weiteren wird vorgeschlagen, dass die Verbindungsbrückenvorrichtung zumindest zwei Lenkerkopplungseinheiten zu einer Kopplung des Grundkörpers mit zumindest zwei Kopplungseinheiten des Mehrpunktlenkers umfasst. Vorzugsweise umfasst die Verbindungsbrückenvorrichtung zumindest zwei Lenkerkopplungseinheiten zu einer Kopplung des Grundkörpers mit dem als ein Vierpunktlenker oder als ein aufgelöster Dreiecklenker ausgebildeten Mehrpunktlenker. Insbesondere sind die Kopplungseinheiten des Mehrpunktlenkers als Verbindungspratzen, insbesondere als Molekulargelenke, ausgebildet. Vorzugsweise sind die Lenkerkopplungseinheiten zur Kopplung mit dem Vierpunklenker oder dem aufgelösten Dreiecklenker in, insbesondere zwei, Außenbereichen der Verbindungsbrückenvorrichtung angeordnet, insbesondere je zumindest eine Lenkerkopplungseinheit je Außenbereich. Die Außenbereiche bilden insbesondere entlang einer Haupterstreckungsrichtung der Verbindungsbrückenvorrichtung voneinander abgewandte Extrempunkte. Unter einer "Haupterstreckungsrichtung" eines Objekts soll insbesondere eine Richtung verstanden werden, welche parallel zu einer längsten Kante eines kleinsten gedachten Quaders verläuft, welcher das Objekt gerade noch vollständig umschließt. Vorzugsweise sind die Achsbefestigungseinheiten in den Außenbereichen angeordnet, insbesondere je zumindest eine Achsbefestigungseinheit je Außenbereich. Vorteilhaft kann eine sichere Kopplung mit einem Vierpunktlenker oder einem aufgelösten Dreiecklenker ermöglicht werden.

Ferner wird vorgeschlagen, dass der Grundkörper sich in einem von der zumindest einen Achsbefestigungseinheit abgewandten Mittelbereich senkrecht zur Haupterstreckungsebene weiter als die zumindest eine Lenkerkopplungseinheit erstreckt. Der Mittelbereich ist insbesondere entlang der Haupterstreckungsrichtung zwischen den beiden Außenbereichen angeordnet. Insbesondere erstreckt sich der Grundkörper in dem Mittelbereich auf zumindest einer Seite der Haupterstreckungsebene, bevorzugt auf beiden Seiten der Haupterstreckungsebene senkrecht zur Haupterstreckungsebene weiter als die zumindest eine Lenkerkopplungseinheit. Vorteilhaft kann eine besonders robuste Verbindungsbrückenvorrichtung bereitgestellt werden.

Weiterhin wird vorgeschlagen, dass der Grundkörper in einem, insbesondere dem vorgenannten, von der zumindest einen Achsbefestigungseinheit abgewandten Mittelbereich eine maximale Quererstreckung senkrecht zur Haupterstreckungsebene aufweist. Insbesondere weist der Grundkörper in dem Mittelbereich eine größere Quererstreckung, insbesondere Bauteilstärke, senkrecht zur Haupterstreckungsebene auf als in den Außenbereichen. Insbesondere weist zumindest der Grundkörper der zur Anbindung des Vierpunktlenkers vorgesehenen Verbindungsbrückenvorrichtung in dem Mittelbereich eine maximale Quererstreckung senkrecht zur Haupterstreckungsebene auf. Vorzugsweise kann der Grundkörper in dem Mittelbereich parallel zu der Haupterstreckungsebene zumindest eine Einbuchtung, Ausnehmung o. dgl. aufweisen, insbesondere zu einer passgenauen Anlage an der Fahrzeugachse mit beispielsweise einer Leistungselektronik. Vorteilhaft kann eine effiziente Kraft- und/oder Momentenaufnahme durch den Grundkörper ermöglicht werden.

Zudem wird vorgeschlagen, dass der Grundkörper zumindest teilweise als ein Hohlprofilbauteil ausgebildet ist. Vorzugsweise ist der Grundkörper als ein einseitig oder mehrseitig offenes Hohlprofilbauteil ausgebildet. Insbesondere ist der Grundkörper der zur Anbindung des Vierpunktlenkers vorgesehenen Verbindungsbrückenvorrichtung als ein einseitig offenes Holprofilbauteil ausgebildet. Insbesondere ist der Grundkörper zur Anbindung des Dreipunktlenkers vorgesehenen Verbindungsbrückenvorrichtung als ein mehrseitig, insbesondere zweiseitig, offenes Hohlprofilbauteil ausgebildet. Vorzugsweise ist der Grundkörper der zur Anbindung des Vierpunktlenkers vorgesehenen Verbindungsbrückenvorrichtung auf einer von der Haupterstreckungsebene geschnittenen Seite zumindest teilweise offen ausgebildet. Insbesondere ist der Grundkörper der zur Anbindung des Vierpunktlenkers vorgesehenen Verbindungsbrückenvorrichtung auf einer von den Lenkerkopplungseinheiten abgewandten Seite zumindest teilweise offen ausgebildet. Insbesondere ist der Grundkörper der zur Anbindung des Dreipunktlenkers vorgesehenen Verbindungsbrückenvorrichtung auf zumindest einer, bevorzugt auf zwei mit der Haupterstreckungsebene schnittpunktfreie/n Seite/n offen ausgebildet. Vorzugsweise ist der Grundkörper der zur Anbindung des Dreipunktlenkers vorgesehenen Verbindungsbrückenvorrichtung auf zwei Seiten, die auf unterschiedlichen Seiten der Haupterstreckungsebene angeordnet sind, offen ausgebildet. Bevorzugt ist der Grundkörper zumindest im Mittelbereich offen ausgebildet. Vorteilhaft kann eine gewichtsoptimierte Verbindungsbrückenvorrichtung bereitgestellt werden.

Des Weiteren wird vorgeschlagen, dass der Grundkörper zumindest eine Versteifungsrippe aufweist. Insbesondere weist zumindest der Grundkörper der zur Anbindung des Vierpunktlenkers vorgesehenen Verbindungsbrückenvorrichtung die zumindest eine Versteifungsrippe auf. Insbesondere weist der Grundkörper zumindest eine Versteifungsrippe, bevorzugt zumindest zwei Versteifungsrippen, besonders bevorzugt zumindest drei Versteifungsrippen und ganz besonders bevorzugt zumindest vier Versteifungsrippen auf. Vorzugsweise weisen die Versteifungsrippen Schnittebenen mit der Haupterstreckungsebene auf. Insbesondere erstrecken sich die Versteifungsrippen senkrecht und parallel zu der Haupterstreckungsebene. Insbesondere stützen die Versteifungsrippen quer zu der Haupterstreckungsebene voneinander beabstandete Mantelbereiche des Grundkörpers gegeneinander ab. Der Grundkörper mit den Versteifungsrippen wird insbesondere durch eine, insbesondere im Mittelbereich, einseitig offene Gussstruktur gebildet. Vorteilhaft kann eine gewichts- und steifigkeitsoptimierte Verbindungsbrückenvorrichtung bereitgestellt werden.

Ferner wird vorgeschlagen, dass der Grundkörper zumindest zwei Versteifungsrippen aufweist, die gemeinsam eine Hinterschneidung bilden. Vorzugsweise begrenzen die beiden Versteifungsrippen zumindest abschnittsweise einen zentralen Hohlraum in dem Mittelbereich. Die beiden Versteifungsrippen schließen in der Haupterstreckungsebene betrachtet insbesondere einen Winkel relativ zueinander von zumindest 45°, bevorzugt einen Winkel von zumindest 65° und besonders bevorzugt einen Winkel von zumindest 85° ein. Die beiden Versteifungsrippen schließen in der Haupterstreckungsebene betrachtet insbesondere einen Winkel relativ zueinander von höchstens 125°, bevorzugt von höchstens 105° und besonders bevorzugt von höchstens 85° ein. Vorzugsweise erstrecken sich weitere Versteifungsrippen des Grundkörpers in der Haupterstreckungsebene betrachtet parallel zueinander. Vorteilhaft kann eine Verbindungsbrückenvorrichtung mit einer hohen Biegesteifigkeit bereitgestellt werden.

Weiterhin wird erfindungsgemäß ein Verbindungssystem umfassend zumindest die vorgenannte mehrteilige Fahrzeugachse und zumindest eine erfindungsgemäße Verbindungsbrückenvorrichtung, um einen Mehrpunktlenker an die mehrteilige Fahrzeugachse anzubinden, vorgeschlagen. Erfindungsgemäß umfasst die Fahrzeugachse zumindest zwei Anbindungseinheiten, wobei je zumindest eine Anbindungseinheit an je zumindest einem verschieden von dem Zentralteil ausgebildeten Achsteilkörper angeordnet ist. Vorzugsweise sind die verschieden von dem Zentralteil ausgebildeten Achsteilkörper, insbesondere die Anbindungseinheiten, entlang der Fahrzeugachse symmetrisch um das Zentralteil angeordnet. Vorzugsweise sind die Anbindungseinheiten zu einer Kopplung mit den Achsbefestigungseinheiten der Verbindungsbrückenvorrichtung vorgesehen. Insbesondere bilden die Anbindungseinheiten Schraubstellen zu einer Schraubfixierung der Verbindungsbrückenvorrichtung an den verschieden von dem Zentralteil ausgebildeten Achsteilkörpern. Vorteilhaft kann eine sichere und verschleißarme Fixierung der Verbindungsbrückenvorrichtung an der Fahrzeugachse ermöglicht werden.

Zudem wird vorgeschlagen, dass die Fahrzeugachse als eine motorisierte Achse ausgebildet ist und das Zentralteil zumindest eine Antriebseinheit umfasst. Insbesondere ist die Achse zu einem, insbesondere rotatorischen, Antrieb von mit der Fahrzeugachse verbundenen Rädern des Fahrzeugs vorgesehen. Erfindungsgemäß bildet das Zentralteil zumindest teilweise ein Antriebsgehäuse zur Aufnahme der zumindest einen Antriebseinheit. Die Antriebseinheit umfasst insbesondere zumindest einen Elektromotor, bevorzugt zumindest zwei Elektromotoren. Alternativ oder zusätzlich ist denkbar, dass die Antriebseinheit zumindest einen Hydraulikantrieb, zumindest einen Pneumatikantrieb, zumindest einen Verbrennungsmotor oder einen anderen, einem Fachmann als sinnvoll erscheinenden Antrieb umfasst. Die Antriebseinheit kann weitere, einem Fachmann als sinnvoll erscheinende Komponenten, wie beispielsweise ein Differential, eine Übersetzungsstufe, ein Getriebe o. dgl., umfassen. Das Zentralteil ist entlang der Fahrzeugachse mittig zwischen den zumindest zwei verschieden von dem Zentralteil ausgebildeten Achsteilkörpern angeordnet und insbesondere mit den Achsteilkörpern gekoppelt. Die verschieden von dem Zentralteil ausgebildeten Achsteilkörper bilden insbesondere zumindest teilweise Gehäuse für Momentübertragungseinheiten aus. Vorzugsweise sind die verschieden von dem Zentralteil ausgebildeten Achsteilkörper analog zueinander ausgebildet. Vorteilhaft kann eine motorisierte Achse betriebssicher und verschleißarm mit einem Mehrpunktlenker genutzt werden.

Des Weiteren wird vorgeschlagen, dass das Verbindungssystem zumindest einen Mehrpunktlenker, insbesondere einen Dreipunktlenker oder einen Vierpunktlenker, umfasst. Alternativ zu einer Ausbildung als ein Dreipunktlenker oder als ein Vierpunktlenker kann der Mehrpunktlenker auch als ein aufgelöster Dreiecklenker ausgebildet sein. Der Mehrpunktlenker ist vorzugsweise an zwei Punkten gelenkig an den Fahrzeugrahmen des Fahrzeugs angebunden. Der als ein Dreipunktlenker ausgebildete Mehrpunktlenker ist insbesondere an einem weiteren Punkt gelenkig mit der Verbindungsbrückenvorrichtung gekoppelt. Der als ein Vierpunktlenker ausgebildete Mehrpunktlenker ist insbesondere an zwei weiteren Punkten gelenkig mit der Verbindungsbrückenvorrichtung gekoppelt. Vorteilhaft kann ein effizientes und betriebssicheres Verbindungssystem bereitgestellt werden.

Ferner wird ein, insbesondere das vorgenannte, Fahrzeug, insbesondere ein Nutzfahrzeug, umfassend zumindest ein erfindungsgemäßes Verbindungssystem vorgeschlagen. Bevorzugt ist das Fahrzeug als ein Landfahrzeug ausgebildet. Das Fahrzeug kann insbesondere als ein LKW, als ein Baustellenfahrzeug, als ein Bus oder als ein anderes, einem Fachmann als sinnvoll erscheinendes Fahrzeug ausgebildet sein. Vorteilhaft kann ein fahrzeuginsassensicheres Fahrzeug bereitgestellt werden.

Weiterhin wird ein Verfahren zur Herstellung einer erfindungsgemäßen Verbindungsbrückenvorrichtung eines Verbindungssystems vorgeschlagen. In zumindest einem Verfahrensschritt wird die Verbindungsbrückenvorrichtung gegossen. In zumindest einem weiteren, insbesondere optionalen, Verfahrensschritt wird zumindest ein Gusskern zerstört. Vorteilhaft kann ein effizientes und ressourcenschonendes Verfahren zur Herstellung der Verbindungsbrückenvorrichtung bereitgestellt werden.

Die Erfindung wird an zwei Ausführungsbeispielen in den folgenden Figuren verdeutlicht. Es zeigen:
Fig. 1 ein erfindungsgemäßes Fahrzeug in einer schematischen Darstellung,
Fig. 2 ein erfindungsgemäßes Verbindungssystem des erfindungsgemäßen Fahrzeugs aus Fig. 1 in einer schematischen perspektivischen Darstellung,
Fig. 3 eine erfindungsgemäße Verbindungsbrückenvorrichtung des erfindungsgemä-ßen Verbindungssystems aus Fig. 2 in einer schematischen perspektivischen Darstellung,
Fig. 4 ein Ablaufdiagramm eines erfindungsgemäßen Verfahrens zur Herstellung einer erfindungsgemäßen Verbindungsbrückenvorrichtung aus Fig. 3 in einer schematischen Darstellung,
Fig. 5 ein alternatives erfindungsgemäßes Verbindungssystem in einer schematischen perspektivischen Darstellung und
Fig. 6 eine alternative erfindungsgemäße Verbindungsbrückenvorrichtung des alternativen erfindungsgemäßen Verbindungssystems aus Fig. 5 in einer schematischen perspektivischen Darstellung.

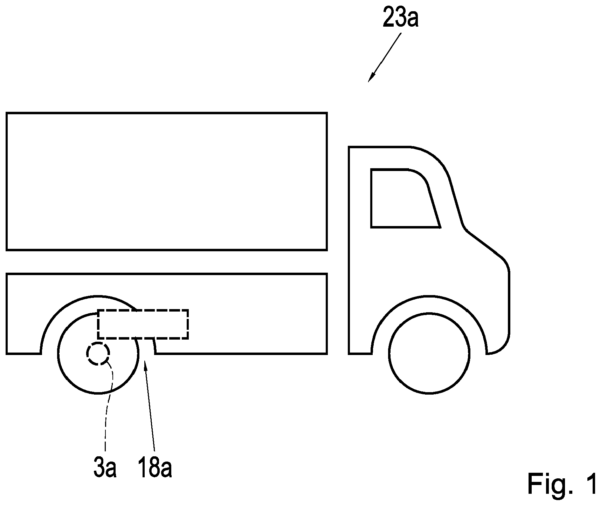

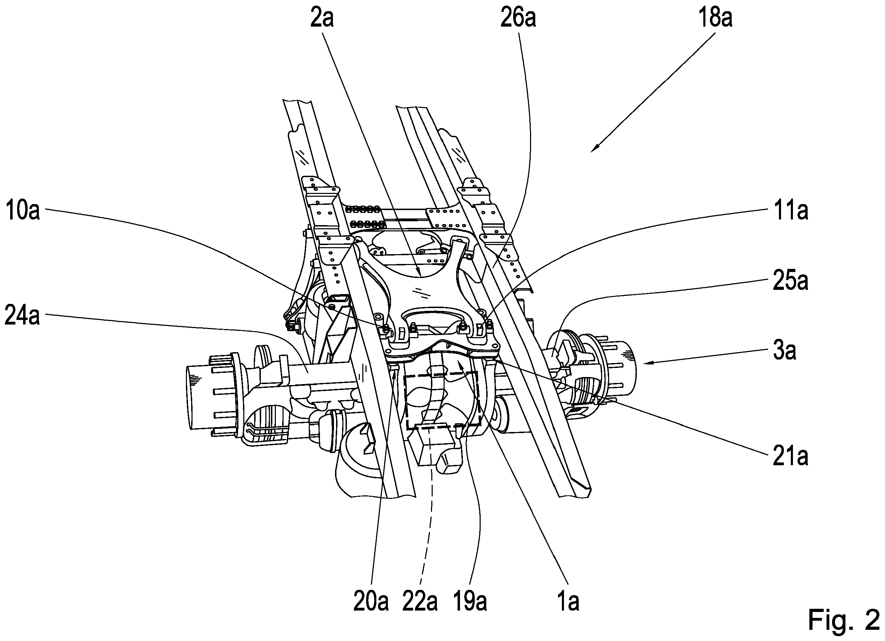

Figur 1 zeigt ein Fahrzeug 23a, insbesondere ein Nutzfahrzeug, in einer schematischen Darstellung. Das Fahrzeug 23a ist als ein Landfahrzeug, hier beispielhaft als ein LKW, ausgebildet. Das Fahrzeug 23a umfasst ein Verbindungssystem 18a. Das Verbindungssystem 18a umfasst einen Mehrpunktlenker 2a, insbesondere einen Vierpunktlenker, eine, insbesondere mehrteilige, Fahrzeugachse 3a und eine Verbindungsbrückenvorrichtung 1a (vgl. Figur 2).

Figur 2 zeigt das Verbindungssystem 18a des Fahrzeugs 23a aus Figur 1 in einer schematischen perspektivischen Darstellung. Die Verbindungsbrückenvorrichtung 1a ist dazu vorgesehen, den Mehrpunktlenker 2a an die mehrteilige Fahrzeugachse 3a anzubinden. Der Mehrpunktlenker 2a ist im vorliegenden Ausführungsbeispiel als ein Vierpunktlenker ausgebildet. Die Fahrzeugachse 3a weist zwei getrennt von einem Zentralteil 19a der Fahrzeugachse 3a angeordnete Anbindungseinheiten 20a, 21a zu einer Befestigung der Verbindungsbrückenvorrichtung 1a auf. Je eine Anbindungseinheit 20a, 21a ist an je einem verschieden von dem Zentralteil 19a ausgebildeten Achsteilkörper 24a, 25a angeordnet. Die verschieden von dem Zentralteil 19a ausgebildeten Achsteilkörper 24a, 25a, insbesondere die Anbindungseinheiten 20a, 21a, sind entlang der Fahrzeugachse 3a symmetrisch um das Zentralteil 19a angeordnet. Die Anbindungseinheiten 20a, 21a bilden Schraubstellen zu einer Schraubfixierung der Verbindungsbrückenvorrichtung 1a an den verschieden von dem Zentralteil ausgebildeten Achsteilkörpern 24a, 25a.

Die Fahrzeugachse 3a ist als eine motorisierte Achse ausgebildet. Das Zentralteil 19a umfasst eine Antriebseinheit 22a. Das Zentralteil 19a bildet zumindest teilweise ein Antriebsgehäuse zur Aufnahme der Antriebseinheit 22a. Die Antriebseinheit 22a ist innerhalb des Antriebsgehäuses angeordnet. Die Antriebseinheit 22a umfasst beispielhaft einen oder mehrere Elektromotoren, ein Differential und gegebenenfalls eine Übersetzungsstufe (hier nicht dargestellt). Das Zentralteil 19a ist entlang der Fahrzeugachse 3a mittig zwischen den zwei verschieden von dem Zentralteil 19a ausgebildeten Achsteilkörpern 24a, 25a angeordnet und mit den Achsteilkörpern 24a, 25a gekoppelt. Das Zentralteil 19a ist weniger robust, insbesondere weicher, als die verschieden von dem Zentralteil 19a ausgebildeten Achsteilkörper 24a, 25a ausgebildet.

Der Mehrpunktlenker 2a ist an zwei Punkten gelenkig an einen Fahrzeugrahmen 26a des Fahrzeugs 23a angebunden. Der Mehrpunktlenker 2a ist an zwei weiteren Punkten gelenkig mit der Verbindungsbrückenvorrichtung 1a gekoppelt. Die Verbindungsbrückenvorrichtung 1a ist als eine Verbindungsbrücke, insbesondere als eine Achsbrücke, ausgebildet. Die Verbindungsbrückenvorrichtung 1a ist dazu vorgesehen, den Mehrpunktlenker 2a indirekt an die Fahrzeugachse 3a anzubinden. Die Verbindungsbrückenvorrichtung 1a dient als ein Verbindungsstück zwischen dem Mehrpunktlenker 2a und der Fahrzeugachse 3a. Die Verbindungsbrückenvorrichtung 1a ist dazu vorgesehen, die zwischen der Fahrzeugachse 3a und dem Mehrpunktlenker 2a übertragenen Kräfte und/oder Momente zumindest teilweise aufzunehmen und zumindest teilweise von dem Zentralteil 19a, insbesondere in die verschieden von dem Zentralteil 19a ausgebildeten Achsteilkörper 24a, 25a, abzuleiten.

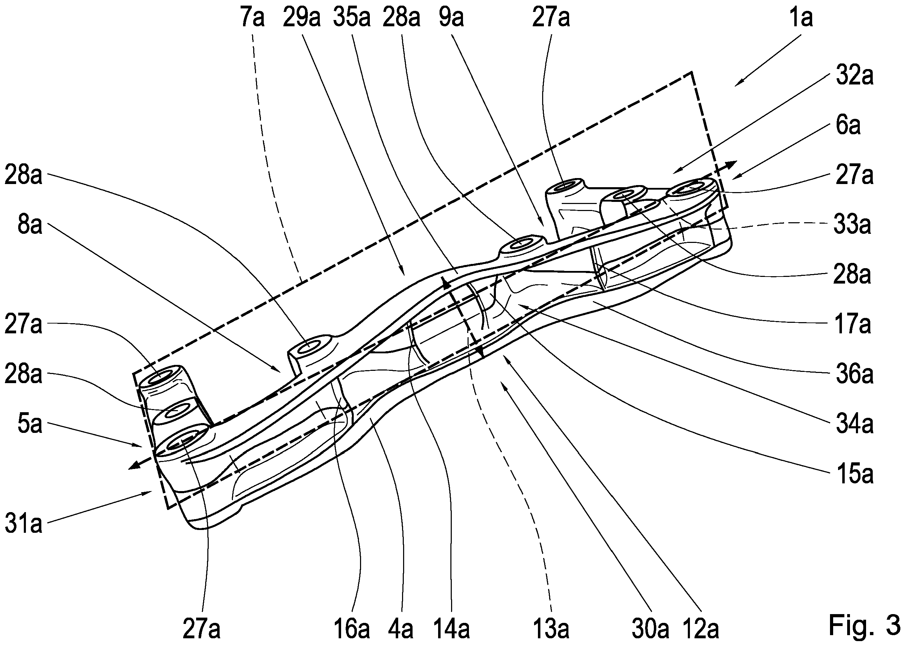

Figur 3 zeigt die Verbindungsbrückenvorrichtung 1a des Verbindungssystems 18a aus Figur 2 in einer schematischen perspektivischen Darstellung. Die Verbindungsbrückenvorrichtung 1a umfasst zumindest einen Grundkörper 4a zu einer Aufnahme und Ableitung von zwischen der Fahrzeugachse 3a und dem Mehrpunktlenker 2a übertragenen Kräften und/oder Momenten. Die Verbindungsbrückenvorrichtung 1a umfasst zwei Achsbefestigungseinheiten 5a, 6a zu einer Befestigung des Grundkörpers 4a an der Fahrzeugachse 3a. Die Verbindungsbrückenvorrichtung 1a umfasst zwei von einer Haupterstreckungsebene 7a des Grundkörpers 4a geschnittene Lenkerkopplungseinheiten 8a, 9a zu einer Kopplung des Grundkörpers 4a mit dem Mehrpunklenker 2a.

Die Achsbefestigungseinheiten 5a, 6a sind zur Befestigung des Grundkörpers 4a an den zwei verschieden von dem Zentralteil 19a ausgebildeten Achsteilkörpern 24a, 25a, insbesondere an den Anbindungseinheiten 20a, 21a, vorgesehen. Der Grundkörper ist als ein Metallbauteil, insbesondere als ein Gussbauteil, ausgebildet. Die Achsbefestigungseinheiten 5a, 6a und die Lenkerkopplungseinheiten 8a, 9a sind einteilig mit dem Grundkörper 4a ausgebildet. Die Verbindungsbrückenvorrichtung 1a ist als ein einteiliges Bauteil ausgebildet. Die Achsbefestigungseinheiten 5a, 6a und die Lenkerkopplungseinheiten 8a, 9a umfassen Befestigungskanäle 27a, 28a zu einer Aufnahme von Befestigungsmitteln. Die Befestigungskanäle 27a, 28a erstrecken sich durch den Grundkörper 4a, werden insbesondere durch den Grundkörper 4a begrenzt. Die Lenkerkopplungseinheiten 8a, 9a sind zumindest abschnittsweise in der Haupterstreckungsebene 7a des Grundkörpers 4a angeordnet, insbesondere zu einer effizienten Kraft- und/oder Momentenaufnahme durch den Grundkörper 4a. Die Lenkerkopplungseinheiten 8a, 9a erstrecken sich zumindest abschnittsweise auf zwei voneinander abgewandten Seiten 29a, 30a der Haupterstreckungsebene 7a des Grundkörpers 4a.

Die Lenkerkopplungseinheiten 8a, 9a sind zu einer Kopplung des Grundkörpers 4a mit zumindest zwei Kopplungseinheiten 10a, 11a des Mehrpunktlenkers 2a vorgesehen. Die Kopplungseinheiten 10a, 11a des Mehrpunktlenkers 2a sind als Verbindungspratzen, insbesondere als Molekulargelenke, ausgebildet (vgl. Figur 2). Die Lenkerkopplungseinheiten 8a, 9a sind in zwei Außenbereichen 31a, 32a der Verbindungsbrückenvorrichtung 1a angeordnet, insbesondere je eine Lenkerkopplungseinheit 8a, 9a je Außenbereich 31a, 32a. Die Außenbereiche 31a, 32a bilden entlang einer Haupterstreckungsrichtung 33a der Verbindungsbrückenvorrichtung 1a voneinander abgewandte Extrempunkte. Die Achsbefestigungseinheiten 5a, 6a sind in den Außenbereichen 31a, 32a angeordnet, insbesondere je eine Achsbefestigungseinheit 5a, 6a je Außenbereich 31a, 32a.

Der Grundkörper 4a erstreckt sich in einem von den Achsbefestigungseinheiten 5a, 6a abgewandten Mittelbereich 12a senkrecht zur Haupterstreckungsebene 7a weiter als die Lenkerkopplungseinheiten 8a, 9a. Der Grundkörper 4a erstreckt sich in dem Mittelbereich 12a auf beiden Seiten 29a, 30a der Haupterstreckungsebene 7a senkrecht zur Haupterstreckungsebene 7a weiter als die Lenkerkopplungseinheiten 8a, 9a. Der Grundkörper 4a weist in dem Mittelbereich 12a eine maximale Quererstreckung 13a senkrecht zur Haupterstreckungsebene 7a auf. Der Grundkörper 4a weist in dem Mittelbereich 12a eine größere Quererstreckung 13a, insbesondere Bauteilstärke, senkrecht zur Haupterstreckungsebene 7a auf als in den Außenbereichen 31a, 32a.

Der Grundkörper 4a ist zumindest teilweise als ein Hohlprofilbauteil ausgebildet. Der Grundkörper 4a ist als ein einseitig offenes Hohlprofilbauteil ausgebildet. Der Grundkörper 4a ist auf einer von der Haupterstreckungsebene 7a geschnittenen Seite 34a zumindest teilweise offen ausgebildet. Der Grundkörper 4a ist auf einer von den Lenkerkopplungseinheiten 8a, 9a abgewandten Seite 34a zumindest teilweise offen ausgebildet. Der Grundkörper 4a ist im Mittelbereich 12a offen ausgebildet.

Der Grundkörper 4a weist zumindest eine Versteifungsrippe 14a, 15a, 16a, 17a auf. Im vorliegenden Ausführungsbeispiel weist der Grundkörper 4a beispielhaft vier Versteifungsrippen 14a, 15a, 16a, 17a auf. Die Versteifungsrippen 14a, 15a, 16a, 17a weisen Schnittebenen mit der Haupterstreckungsebene 7a auf. Die Versteifungsrippen 14a, 15a, 16a, 17a erstrecken sich senkrecht und parallel zu der Haupterstreckungsebene 7a. Die Versteifungsrippen 14a, 15a, 16a, 17a stützen quer zu der Haupterstreckungsebene 7a voneinander beabstandete Mantelbereiche 35a, 36a des Grundkörpers 4a gegeneinander ab. Der Grundkörper 4a mit den Versteifungsrippen 14a, 15a, 16a, 17a wird durch eine, insbesondere im Mittelbereich 12a, einseitig offene Gussstruktur gebildet. Eine erste Versteifungsrippe 14a und eine zweite Versteifungsrippe 15a sind entlang der Haupterstreckungsrichtung 33a symmetrisch zueinander angeordnet. Eine dritte Versteifungsrippe 16a und eine vierte Versteifungsrippe 17a sind entlang der Haupterstreckungsrichtung 33a symmetrisch zueinander angeordnet.

Der Grundkörper 4a weist zumindest zwei Versteifungsrippen 14a, 15a, im vorliegenden Ausführungsbeispiel beispielhaft die erste Versteifungsrippe 14a und die zweite Versteifungsrippe 15a, auf, die gemeinsam eine Hinterschneidung bilden. Die beiden Versteifungsrippen 14a, 15a begrenzen zumindest abschnittsweise einen zentralen Hohlraum in dem Mittelbereich 12a. Die beiden Versteifungsrippen 14a, 15a schlie-ßen im vorliegenden Ausführungsbeispiel in der Haupterstreckungsebene 7a betrachtet beispielhaft einen Winkel von ca. 85° relativ zueinander ein. Die dritte Versteifungsrippe 16a und die vierte Versteifungsrippe 17a erstrecken sich in der Haupterstreckungsebene 7a betrachtet parallel zueinander.

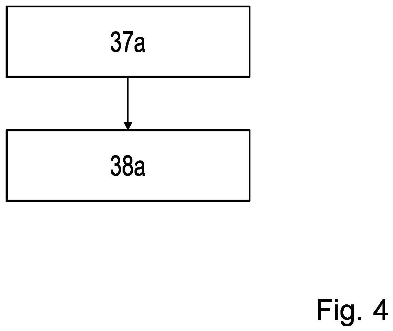

Figur 4 zeigt ein Ablaufdiagramm eines Verfahrens zur Herstellung der Verbindungsbrückenvorrichtung 1a aus Figur 3 in einer schematischen Darstellung. In zumindest einem Verfahrensschritt 37a wird die Verbindungsbrückenvorrichtung 1a gegossen. In zumindest einem weiteren Verfahrensschritt 38a wird zumindest ein Gusskern zerstört. In einer alternativen Ausführungsform kann auch auf den Gusskern bei einem Gießen verzichtet werden.

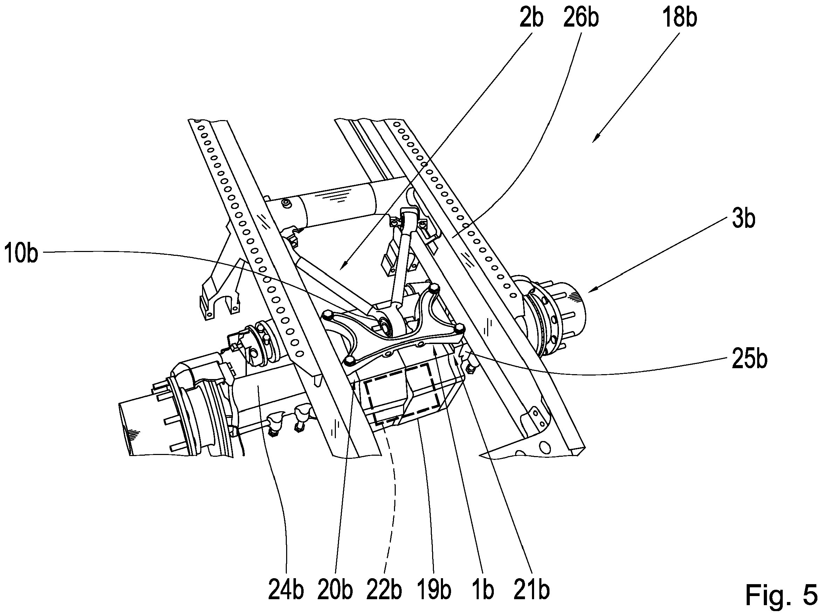

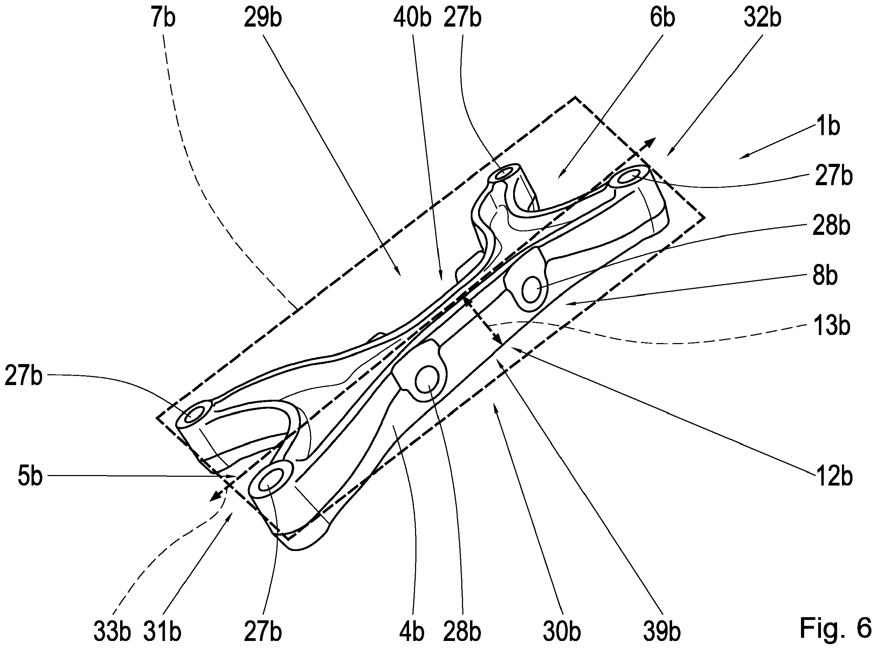

In den Figuren 5 und 6 ist ein weiteres Ausführungsbeispiel der Erfindung dargestellt. Hinsichtlich der Ausgestaltung gleich bezeichneter Bauteile, insbesondere hinsichtlich Bauteilen mit gleichen Bezugszeichen, darf auf das Ausführungsbeispiel der Figuren 1 bis 4 verwiesen werden. Zur Unterscheidung der Ausführungsbeispiele ist den Bezugszeichen des Ausführungsbeispiels der Figuren 1 bis 4 der Buchstabe a und den Bezugszeichen des Ausführungsbeispiels der Figuren 5 und 6 der Buchstabe b nachgestellt.

Figur 5 zeigt ein alternatives Verbindungssystem 18b in einer schematischen perspektivischen Darstellung. Das Verbindungssystem 18b umfasst einen Mehrpunktlenker 2b, insbesondere einen Dreipunktlenker, eine, insbesondere mehrteilige, Fahrzeugachse 3b und eine Verbindungsbrückenvorrichtung 1b. Die Fahrzeugachse 3b ist im Wesentlichen analog zu der im vorhergehenden Ausführungsbeispiel gezeigten Fahrzeugachse 3a. Der Mehrpunktlenker 2b ist im Gegensatz zu dem als Vierpunktlenker ausgebildeten Mehrpunktlenker 2a des vorhergehenden Ausführungsbeispiels als ein Dreipunktlenker ausgebildet. Um eine Anbindung des Dreipunktlenkers an die Fahrzeugachse 3b zu ermöglichen, ist die Verbindungsbrückenvorrichtung 1b verschieden von der Verbindungsbrückenvorrichtung 1a des vorhergehenden Ausführungsbeispiels ausgebildet. Der Mehrpunktlenker 2b ist an zwei Punkten gelenkig an einen Fahrzeugrahmen 26b angebunden. Der Mehrpunktlenker 2b ist an einem weiteren Punkt gelenkig mit der Verbindungsbrückenvorrichtung 1b gekoppelt.

Figur 6 zeigt die Verbindungsbrückenvorrichtung 1b des alternativen Verbindungssystems 18b aus Figur 5 in einer schematischen perspektivischen Darstellung. Die Verbindungsbrückenvorrichtung 1b umfasst eine Lenkerkopplungseinheit 8b zu einer Kopplung eines Grundkörpers 4b der Verbindungsbrückenvorrichtung 1b mit dem Mehrpunktlenker 2b. Befestigungskanäle 28b der Lenkerkopplungseinheit 8b sind im Vergleich zu Befestigungskanälen 28a der Lenkerkopplungseinheiten 8a, 9a des vorherigen Ausführungsbeispiels um 90° gedreht.

Der Grundkörper 4b ist zumindest teilweise als ein Hohlprofilbauteil ausgebildet. Der Grundkörper 4b ist als ein mehrseitig, insbesondere zweiseitig, offenes Hohlprofilbauteil ausgebildet. Der Grundkörper 4b ist auf zwei mit einer Haupterstreckungsebene 7b des Grundkörpers 4b schnittpunktfreien Seiten 39b, 40b, die auf unterschiedlichen Seiten 29b, 30b der Haupterstreckungsebene 7b angeordnet sind, offen ausgebildet.

### Bezugszeichen

- 1: Verbindungsbrückenvorrichtung
- 2: Mehrpunktlenker
- 3: Fahrzeugachse
- 4: Grundkörper
- 5: Achsbefestigungseinheit
- 6: Achsbefestigungseinheit
- 7: Haupterstreckungsebene
- 8: Lenkerkopplungseinheit
- 9: Lenkerkopplungseinheit
- 10: Kopplungseinheit
- 11: Kopplungseinheit
- 12: Mittelbereich
- 13: Quererstreckung
- 14: Versteifungsrippe
- 15: Versteifungsrippe
- 16: Versteifungsrippe
- 17: Versteifungsrippe
- 18: Verbindungssystem
- 19: Zentralteil
- 20: Anbindungseinheit
- 21: Anbindungseinheit
- 22: Antriebseinheit
- 23: Fahrzeug
- 24: Achsteilkörper
- 25: Achsteilkörper
- 26: Fahrzeugrahmen
- 27: Befestigungskanal
- 28: Befestigungskanal
- 29: Seite
- 30: Seite
- 31: Außenbereich
- 32: Außenbereich
- 33: Haupterstreckungsrichtung
- 34: Seite
- 35: Mantelbereich
- 36: Mantelbereich
- 37: Verfahrensschritt
- 38: Verfahrensschritt
- 39: Seite
- 40: Seite

## Patentansprüche

1. Verbindungssystem (18), umfassend zumindest eine mehrteilige Fahrzeugachse (3a; 3b) und zumindest eine Verbindungsbrückenvorrichtung (1a; 1b), um einen Mehrpunktlenker (2a; 2b) an die mehrteilige Fahrzeugachse (3a; 3b) anzubinden, wobei die Verbindungsbrückenvorrichtung (1a; 1b) zumindest einen Grundkörper (4a; 4b) zu einer Aufnahme und Ableitung von zwischen der Fahrzeugachse (3a; 3b) und dem Mehrpunktlenker (2a; 2b) übertragenen Kräften und/oder Momenten, zumindest eine Achsbefestigungseinheit (5a; 5b, 6a; 6b) zu einer Befestigung des Grundkörpers (4a; 4b) an der Fahrzeugachse (3a; 3b) und zumindest eine von einer Haupterstreckungsebene (7a; 7b) des Grundkörpers (4a; 4b) geschnittene Lenkerkopplungseinheit (8a; 8b, 9a) zu einer Kopplung des Grundkörpers (4a; 4b) mit dem Mehrpunktlenker (2a; 2b) umfasst, **dadurch gekennzeichnet, dass** die Fahrzeugachse (3a, 3b) zwei getrennt von einem Zentralteil (19a; 19b) der Fahrzeugachse (3a; 3b) angeordnete Anbindungseinheiten (20a, 21a, 20b, 21b) zu einer Befestigung der Verbindungsbrückenvorrichtung (1a; 1b) aufweist, wobei das Zentralteil (19a; 19b) zumindest teilweise ein Antriebsgehäuse zur Aufnahme einer Antriebseinheit (22a; 22b) bildet, wobei je eine Anbindungseinheit (20a, 21a; 20b, 21b) an je einem verschieden von dem Zentralteil (19a; 19b) ausgebildeten Achsteilkörper (24a, 25a, 24b, 25b) angeordnet ist.

2. Verbindungssystem (18) nach Anspruch 1, umfassend zumindest zwei Lenkerkopplungseinheiten (8a, 9a) zu einer Kopplung des Grundkörpers (4a) mit zumindest zwei Kopplungseinheiten (10a, 11a) des Mehrpunktlenkers (2a).

3. Verbindungssystem (18) nach Anspruch 1 oder 2, wobei der Grundkörper (4a; 4b) sich in einem von der zumindest einen Achsbefestigungseinheit (5a; 5b, 6a; 6b) abgewandten Mittelbereich (12a; 12b) senkrecht zur Haupterstreckungsebene (7a; 7b) weiter als die zumindest eine Lenkerkopplungseinheit (8a; 8b, 9a) erstreckt.

4. Verbindungssystem (18) nach einem der vorhergehenden Ansprüche, wobei der Grundkörper (4a; 4b) in einem von der zumindest einen Achsbefestigungseinheit (5a; 5b, 6a; 6b) abgewandten Mittelbereich (12a; 12b) eine maximale Quererstreckung (13a; 13b) senkrecht zur Haupterstreckungsebene (7a; 7b) aufweist.

5. Verbindungssystem (18) nach einem der vorhergehenden Ansprüche, wobei der Grundkörper (4a; 4b) zumindest teilweise als ein Hohlprofilbauteil ausgebildet ist.

6. Verbindungssystem (18) nach Anspruch 5, wobei der Grundkörper (4a) zumindest eine Versteifungsrippe (14a, 15a, 16a, 17a) aufweist.

7. Verbindungssystem (18) nach Anspruch 6, wobei der Grundkörper (4a) zumindest zwei Versteifungsrippen (14a, 15a) aufweist, die gemeinsam eine Hinterschneidung bilden.

8. Verbindungssystem (18) nach einem der Ansprüche 1 bis 7, wobei die Fahrzeugachse (3a; 3b) als eine motorisierte Achse ausgebildet ist und das Zentralteil (19a; 19b) zumindest eine Antriebseinheit (22a; 22b) umfasst.

9. Verbindungssystem (18) nach einem der Ansprüche 1 bis 8, umfassend zumindest einen Mehrpunktlenker (2a; 2b), insbesondere einen Dreipunktlenker oder einen Vierpunktlenker.

10. Fahrzeug, insbesondere Nutzfahrzeug, umfassend zumindest ein Verbindungssystem (18a: 18b) nach einem der Ansprüche 1 bis 9.

11. Verfahren zur Herstellung einer Verbindungsbrückenvorrichtung (1a; 1b) eines Verbindungssystems (18) nach einem der Ansprüche 1 bis 9, wobei die Verbindungsbrückenvorrichtung (1a; 1b) gegossen wird.

## Claims

1. Connection system (18) comprising at least one multiple-part vehicle axle (3a; 3b) and at least one connecting bridge device (1a; 1b) so as to attach a multi-point control arm (2a; 2b) to the multiple-part vehicle axle (3a; 3b), wherein the connecting bridge device (1a; 1b) comprises
at least one main body (4a; 4b) for receiving and dissipating forces and/or momentums transmitted between the vehicle axle (3a; 3b) and the multi-point control arm (2a; 2b);
at least one axle fastening unit (5a; 5b, 6a; 6b) for fastening the main body (4a; 4b) to the vehicle axle (3a; 3b); and
at least one control arm coupling unit (8a; 8b, 9a), which is intersected by a plane of main extent (7a; 7b) of the main body (4a; 4b), for coupling the main body (4a; 4b) to the multi-point control arm (2a; 2b),
**characterized in that** the vehicle axle (3a, 3b) has two attachment units (20a, 21a; 20b, 21b), which are disposed separately from a central part (19a; 19b) of the vehicle axle (3a; 3b), for fastening the connecting bridge device (1a; 1b), wherein the central part (19a; 19b) at least partially forms a drive housing for receiving a drive unit (22a; 22b), wherein in each case one attachment unit (20a, 21a; 20b, 21b) is disposed in each case on one axle sub-body (24a, 25a, 24b, 25b) which is configured separately from the central part (19a; 19b).

2. Connection system (18) according to Claim 1, comprising at least two control arm coupling units (8a, 9a) for coupling the main body (4a) to at least two coupling units (10a, 11a) of the multi-point control arm (2a).

3. Connection system (18) according to Claim 1 or 2, wherein the main body (4a; 4b), in a central region (12a; 12b) that faces away from the at least one axle fastening unit (5a; 5b, 6a; 6b), extends perpendicularly to the plane of main extent (7a; 7b) further than the at least one control arm coupling unit (8a; 8b, 9a).

4. Connection system (18) according to one of the preceding claims, wherein the main body (4a; 4b), in a central region (12a; 12b) that faces away from the at least one axle fastening unit (5a; 5b, 6a; 6b), has a maximum transverse extent (13a; 13b) perpendicular to the plane of main extent (7a; 7b).

5. Connection system (18) according to one of the preceding claims, wherein the main body (4a; 4b) is at least partially configured as a hollow-section component.

6. Connection system (18) according to Claim 5, wherein the main body (4a) has at least one reinforcement rib (14a, 15a, 16a, 17a).

7. Connection system (18) according to Claim 6, wherein the main body (4a) has at least two reinforcement ribs (14a, 15a) which conjointly form an undercut.

8. Connection system (18) according to one of Claims 1 to 7, wherein the vehicle axle (3a; 3b) is configured as a motorized axle, and the central part (19a; 19b) comprises at least one drive unit (22a; 22b) .

9. Connection system (18) according to one of Claims 1 to 8, comprising a multi-point control arm (2a; 2b), in particular a three-point control arm or a four-point control arm.

10. Vehicle, in particular commercial vehicle, comprising at least one connection system (18a; 18b) according to one of Claims 1 to 9.

11. Method for producing a connecting bridge device (1a; 1b) of a connection system (18) according to one of Claims 1 to 9, wherein the connecting bridge device (1a; 1b) is cast.

## Revendications

1. Système de liaison (18), comprenant au moins un essieu de véhicule en plusieurs parties (3a ; 3b) et au moins un dispositif de pont de liaison (1a ; 1b), afin d'attacher un bras oscillant multipoint (2a ; 2b) à l'essieu de véhicule en plusieurs parties (3a ; 3b), le dispositif de pont de liaison (1a ; 1b) comprenant au moins un corps de base (4a ; 4b) pour recevoir et dériver des forces et/ou des couples transmis entre l'essieu de véhicule (3a ; 3b) et le bras oscillant multipoint (2a ; 2b), au moins une unité de fixation d'essieu (5a ; 5b, 6a ; 6b) pour fixer le corps de base (4a ; 4b) à l'essieu de véhicule (3a ; 3b) et au moins une unité de couplage de bras oscillant (8a ; 8b, 9a) coupée par un plan d'extension principal (7a ; 7b) du corps de base (4a ; 4b) pour coupler le corps de base (4a ; 4b) au bras oscillant multipoint (2a ; 2b), **caractérisé en ce que** l'essieu de véhicule (3a ; 3b) présente deux unités d'attache (20a, 21a ; 20b, 21b) agencées séparément d'une partie centrale (19a ; 19b) de l'essieu de véhicule (3a ; 3b) pour fixer le dispositif de pont de liaison (1a ; 1b), la partie centrale (19a ; 19b) formant au moins partiellement un boîtier d'entraînement pour recevoir une unité d'entraînement (22a ; 22b), une unité d'attache (20a, 21a ; 20b, 21b) étant agencée respectivement sur un corps partiel d'essieu (24a, 25a, 24b, 25b) réalisé en étant différent de la partie centrale (19a ; 19b).

2. Système de liaison (18) selon la revendication 1, comprenant au moins deux unités de couplage de bras oscillant (8a, 9a) pour coupler le corps de base (4a) avec au moins deux unités de couplage (10a, 11a) du bras oscillant multipoint (2a).

3. Système de liaison (18) selon la revendication 1 ou 2, dans lequel le corps de base (4a ; 4b) s'étend plus loin que l'au moins une unité de couplage de bras oscillant (8a ; 8b, 9a) dans une zone centrale (12a ; 12b) détournée de l'au moins une unité de fixation d'essieu (5a ; 5b, 6a ; 6b), perpendiculairement au plan d'extension principal (7a ; 7b).

4. Système de liaison (18) selon l'une quelconque des revendications précédentes, dans lequel le corps de base (4a ; 4b) présente, dans une zone centrale (12a ; 12b) détournée de l'au moins une unité de fixation d'essieu (5a ; 5b, 6a ; 6b), une extension transversale maximale (13a ; 13b) perpendiculaire au plan d'extension principal (7a ; 7b).

5. Système de liaison (18) selon l'une quelconque des revendications précédentes, dans lequel le corps de base (4a ; 4b) est réalisé au moins en partie sous la forme d'un composant profilé creux.

6. Système de liaison (18) selon la revendication 5, dans lequel le corps de base (4a) présente au moins une nervure de renforcement (14a, 15a, 16a, 17a).

7. Système de liaison (18) selon la revendication 6, dans lequel le corps de base (4a) présente au moins deux nervures de renforcement (14a, 15a) qui forment ensemble une contre-dépouille.

8. Système de liaison (18) selon l'une quelconque des revendications 1 à 7, dans lequel l'essieu de véhicule (3a ; 3b) est réalisé sous la forme d'un essieu motorisé et la partie centrale (19a ; 19b) comprend au moins une unité d'entraînement (22a ; 22b).

9. Système de liaison (18) selon l'une quelconque des revendications 1 à 8, comprenant au moins un bras oscillant multipoint (2a ; 2b), notamment un bras oscillant à trois points ou un bras oscillant à quatre points.

10. Véhicule, notamment véhicule utilitaire, comprenant au moins un système de liaison (18a ; 18b) selon l'une quelconque des revendications 1 à 9.

11. Procédé de fabrication d'un dispositif de pont de liaison (1a ; 1b) d'un système de liaison (18) selon l'une quelconque des revendications 1 à 9, dans lequel le dispositif de pont de liaison (1a ; 1b) est moulé.
